Europäisches Patentamt

European Patent Office

Office européen des brevets

(19)

(11) **EP 0 582 112 B1**

(12) **EUROPÄISCHE PATENTSCHRIFT**

(45) Veröffentlichungstag und Bekanntmachung des Hinweises auf die Patenterteilung:
**24.09.1997 Patentblatt 1997/39**

(51) Int Cl.⁶: **G01P 3/80**

(21) Anmeldenummer: **93111342.7**

(22) Anmeldetag: **15.07.1993**

(54) **Vorrichtung zum Messen der Geschwindigkeit von Textilfäden an einer Wickeleinrichtung**

Apparatus for measuring the speed of a textile thread on a spooling machine

Dispositif pour mesurer la vitesse de fils textile dans une bobineuse

(84) Benannte Vertragsstaaten:
**CH DE FR LI**

(30) Priorität: **05.08.1992 DE 4225842**

(43) Veröffentlichungstag der Anmeldung:
**09.02.1994 Patentblatt 1994/06**

(73) Patentinhaber: **W. SCHLAFHORST AG & CO.
D-41061 Mönchengladbach (DE)**

(72) Erfinder:
• **Hermanns, Ferdinand-Josef
D-41812 Erkelenz (DE)**
• **Krüger, Andreas
D-41065 Mönchengladbach (DE)**

(74) Vertreter: **Hamann, Arndt, Dipl.-Ing.
W. Schlafhorst AG & Co.
Blumenberger Strasse 143-145
41061 Mönchengladbach (DE)**

(56) Entgegenhaltungen:
**EP-A- 0 000 721         EP-A- 0 409 318
CA-A- 680 331           CH-A- 654 931
DE-A- 2 544 821         DE-C- 2 133 942
US-A- 3 689 157         US-A- 3 824 015**

## Beschreibung

Die Erfindung betrifft eine Vorrichtung zum Messen der Geschwindigkeit von Textilfäden an einer Wickeleinrichtung mit den Merkmalen des Oberbegriffs des ersten Anspruches.

Textilmaschinen, an denen Textilfäden in Richtung ihrer Längsachse bewegt und anschließend aufgewickelt werden, benötigen in vielen Fällen auch eine Überwachungseinrichtung für die Geschwindigkeit beziehungsweise die Länge des transportierten und dann aufgewickelten Textilfadens. Das Ergebnis wird beispielsweise verwendet, um Abweichungen der Geschwindigkeit zu korrigieren oder auch möglichst genaue Kenntnis über die Länge des aufgewickelten Fadens zu erlangen.

Zum Beispiel an Spulmaschinen, die Kreuzspulen herstellen, besteht oft die Forderung, daß alle fertiggestellten Kreuzspulen möglichst exakt die gleiche Fadenlänge aufweisen. Das ist vor allem dann erforderlich, wenn diese Kreuzspulen später auf ein Gatter aufgesteckt, gemeinsam abgezogen und geschärt oder gezettelt werden. Unterschiedliche Fadenlängen führen in einem solchen Fall zum Verbleib unterschiedlich großer Fadenreste auf den Kreuzspulhülsen. Das führt bei hochwertigem Fadenmaterial zu nicht hinnehmbaren Verlusten.

Weit verbreitet zur Bestimmung der Fadenlänge an derartigen Kreuzspulmaschinen ist es, die Umdrehungen der Kreuzspule oder auch der Antriebswalze für die Kreuzspule zu zählen und über den Umfang der Kreuzspule beziehungsweise der Antriebswalze die aufgespulte Fadenlänge zu bestimmen. Da der Umfang der Antriebswalze konstant ist, ist die Ermittlung der Umfangsgeschwindigkeit unproblematisch. Allerdings ist der auftretende Schlupf zwischen Antriebswalze und Kreuzspule eine erhebliche Fehlergröße. Diese kann zwar reduziert werden, indem ein Korrekturfaktor eingeführt wird, jedoch ist auch der verbleibende Fehler noch relativ groß.

Die Messung der Spulenumdrehungen ist ebenfalls unproblematisch. Problematisch jedoch ist die genaue Bestimmung des sich während der Spulenreise ändernden Durchmessers und damit Umfang der Kreuzspule. Wird als Maß für den Spulenradius der Drehwinkel des Spulenrahmens verwendet, treten durch Abweichungen im Auf Auflagedruck der Spule auf der Antriebswalze auch dabei erhebliche Fehler auf.

Es sind auch eine Vielzahl von Verfahren bekannt, die durch Kontakt mit dem Faden die Fadengeschwindigkeit ermitteln. Ein solches Verfahren erhöht die Fadenspannung und ist aufgrund der Trägheit des mitbewegten Teiles für höhere Umspulgeschwindigkeiten ungeeignet.

Um die genannten Nachteile zu vermeiden, wurde in der EP 0 000 721 A1 vorgeschlagen, die Fadengeschwindigkeit über zwei in festem Abstand zueinander angeordnete, berührungslos arbeitende Sensoren zu ermitteln. Dafür kommen zum Beispiel optisch oder kapazitiv arbeitende Sensoren in Frage. Diese Sensoren ermitteln stochastische Fadensignale in Form analoger Rauschsignale, die sich aus Unregelmäßigkeiten der Fadenoberfläche oder Fadenmasse in Längsrichtung des Fadens ergeben. Das stromauf zur Fadenlaufrichtung ermittelte stochastische Signal wird zeitlich so weit verschoben, bis es maximale Ähnlichkeit mit dem am stromab angeordneten Sensor ermittelten stochastischen Signal hat. Die dabei ermittelte Verzögerung des ersten Signals entspricht der Zeitspanne, die der Faden vom ersten zum zweiten Sensor benötigt. Da der Abstand der beiden Sensoren bekannt ist, läßt sich auf diese Weise ohne weiteres die Fadengeschwindigkeit ermitteln. Jedoch sind die mathematischen Operationen, die üblicherweise als Kreuzkorrelationsverfahren bezeichnet werden, mit einem gewissen Zeitaufwand verbunden. Das ist unproblematisch, wenn der Faden keine oder nur sehr geringe Beschleunigungen erfährt. Schnelle Geschwindigkeitsänderungen, wie sie beim Spulprozeß zum Beispiel nach Fadenbruch oder Kopswechsel auftreten, lassen sich auf diese Weise nicht mehr so beherrschen, daß eine genaue Messung erfolgen kann.

Die Kreuzkorrelationsfunktion besitzt neben dem Hauptmaximum jedoch noch weitere Maxima. Steht nun nicht genügend Auswertungszeit zur Verfügung, kann als Wert für die Zeitverzögerung aufgrund des Einrastens in einem Nebenmaximum ein falscher Wert ermittelt werden. Das ließe sich nur vermeiden, wenn eine längere Auswertungszeit zur Verfügung stehen würde, was jedoch bei sich derart ändernden Fadengeschwindigkeiten nicht der Fall ist.

Durch die US-A-3,824,015 ist ein Verfahren bekannt geworden, mit dem die gegebenenfalls differierende Geschwindigkeit diskreter Produkte bestimmt werden kann. So wird der Durchgang einer vorderen Materialkante der an den beiden Sensoren vorbeigeführten Produkte detektiert und die zeitdifferenz bestimmt, die zwischen dem Passieren des ersten und des zweiten Sensors liegt. Dieser grobe Geschwindigkeitswert wird in einem zweiten zum Regelkreis des Laufzeitkorrelators parallelen Regelkreis ausgewertet und für eine grobe Geschwindigkeitsvorgabe genutzt. Dadurch kann dem Einrasten des Regelkreises des Laufzeitkorrelators auf ein Nebenmaximum der Kreuzkorrelationsfunktion begegnet werden. Voraussetzung für die Anwendung dieses Verfahrens ist es jedoch, daß für die grobe Geschwindigkeitsbestimmung ein eindeutig detektierbares Signal von den an den Sensoren vorbeitransportierten Produkten ausgeht. Wäre dies, wie zum Beispiel bei einer ununterbrochenen Materialbahn, nicht der Fall, konnte die grobe Geschwindigkeitsvorgabe deutlich von der tatsächlichen Geschwindigkeit abweichen und das Einrasten in ein außerhalb vom Hauptmaximum der Kreuzkorrelationsfunktion liegendes Maximum begünstigen.

Durch die DE-A 25 44 821 sowie die darin erwähnte DE-C-21 33 942 sind ebenfalls Anordnungen bekannt, die auf einen zweiten Regelkreis, einen Grobregelkreis, zurückgreifen. Hierbei wird jedoch in unmittelbarer Nachbarschaft der beiden für den Betrieb des Laufzeitkorrelators erforderlichen Sensoren ein dritter Sensor angeordnet, der, ebenso wie die beiden anderen Sensoren, ein durch die laufende Materialbahn erzeugtes Rauschsignal aufnimmt. Dabei wird die Frequenz des Rauschsignals als grobe Geschwindigkeitsvorgabe ausgewertet, um auch hier eine Geschwindigkeitsvorgabe zu erreichen, die zumindest so genau ist, daß die beabsichtigte Wirkung des Einrastens des Laufzeitkorrelators in das Hauptmaximum der Kreuzkorrelationsfunktion erreicht wird. Dies jedoch erfordert, daß die Oberflächenstruktur der vorbeitransportierten Materialbahn zumindest so homogen ist, daß sich bei gleichbleibender Geschwindigkeit keine signifikanten Änderungen des Rauschverhaltens einstellen.

Aufgabe der Erfindung ist es deshalb, eine gattungsgemäße Vorrichtung vorzuschlagen, die geringere Anforderungen an die Konstanz der Oberflächenstruktur des Meßgutes, dessen Geschwindigkeit zu bestimmen ist, stellt.

Diese Aufgabe wird erfindungsgemäß durch die kennzeichnenden Merkmale des Anspruches 1 gelöst.

Durch die Anordnung des zusätzlichen Sensors an der Wickeleinrichtung wird für die Bestimmung der groben Fadengeschwindigkeit die Oberflächenstruktur des Fadens völlig eliminiert. Die Umfangsgeschwindigkeiten der Rotationskörper beim Wickeln des Fadens weichen zwar auch aufgrund der Kompression der Kreuzspule oder des Schlupfes zwischen den Rotationskörpern von der exakten Fadengeschwindigkeit ab. Jedoch sind diese Abweichungen nicht so groß, daß durch die beanspruchte Bereichsvorgabe ein Nebenmaximum mit erfaßt würde, mit der Folge, daß ein Einrasten des Laufzeitkorrelators auf dieses Nebenmaximum der Kreuzkorrelationsfunktion erfolgen könnte. Diese Voraussetzung ließe sich im Gegensatz dazu bei einer groben Geschwindigkeitsermittlung des Fadens durch Auswerten des Rauschsignales nicht erfüllen, da der Faden sowohl von Partie zu Partie als auch über seine Länge in seiner Oberflächenstruktur, insbesondere seiner Haarigkeit, die das Rauschen verursacht, stark schwankt. Diese Schwankungen wären durchaus geeignet, eine Geschwindigkeit vorzutäuschen, die so stark von der tatsächlichen Geschwindigkeit abweicht, daß der Laufzeitkorrelator in ein Nebenmaximum der Kreuzkorrelationsfunktion einrasten könnte.

Die Erfindung ist durch die Merkmale der Ansprüche 2 bis 10 vorteilhaft weitergebildet.

Als Signalgeber zur Erzeugung von der Fadengeschwindigkeit angenähert proportionalen Signalen kann ein üblicherweise an zum Beispiel modernen Kreuzspulmaschinen vorhandener Impulsaufnehmer dienen, der magnetische Impulse eines mit der Antriebstrommel fest verbundenen Polrades aufnimmt. Ebenso ist ein entsprechender Drehimpulsaufnehmer direkt an der Kreuzspule denkbar, dessen Impulse beispielsweise mit der Winkelstellung des Spulenrahmens gekoppelt werden, um den die Umfangsgeschwindigkeit der Kreuzspule im Verhältnis zu deren Drehzahl beeinflussenden Durchmesser derselben berücksichtigen zu können. In beiden Fällen wird eine flexible Anpassung der Meßergebnisse an sich ändernde Spulgeschwindigkeiten erreicht. Die unzureichende Meßgenauigkeit ist ohne Einfluß, da die dem Laufzeitkorrelator zugeführten Signale, wie bereits erläutert, nur der Bereichsvorgabe dienen.

Vorteilhaft ist der Impulsaufnehmer ausgangsseitig mit einem Frequenz-/Spannungsumwandler verbunden, mit dessen Ausgangssignalen die Bereichsvorgabe für das Einrasten des Regelkreises des Laufzeitkorrelators erfolgt. Er ist dazu mit einem Rückkopplungsintegrator des Regelkreises des Laufzeitkorrelators verbunden.

Statt der Verarbeitung analoger Signale kann auch eine digitale Signalverarbeitung vorgesehen werden, die mit geringerem Aufwand und hoher Genauigkeit realisiert werden kann. Dazu sind den Sensoren Trigger nachgeschaltet und ist das analoge Verzögerungsglied für die Zeitverzögerung um die Modelltotzeit $\tau$ durch ein Schieberegister ersetzt.

Zur Verbesserung der Signalausbeute können den Triggern Differenzierer vorgeschaltet werden. Auf diese Weise werden nicht nur die Null-Durchgänge der Signale, sondern alle Extremwerte erfaßt.

Für die Ermittlung der Lauflänge des Textilfadens ist dem Dividierglied, welches die Momentanwerte der Fadengeschwindigkeit ermittelt, ein Integrator nachgeschaltet, der die Lauflänge des Textilfadens kumulativ ermittelt. Das Ergebnis kann dann angezeigt werden und bei Erreichen eines Grenzwertes, inbesondere der SOLL-Fadenlänge der Kreuzspule, kann die Spulstelle für den Kreuzspulenwechsel angehalten werden. Dabei ist gewährleistet, daß die SOLL-Fadenlänge sehr exakt erreicht ist.

Der Regelkreis des Laufzeitkorrelators kann auf unterschiedliche Weise gestaltet werden. Dem Rückkopplungsintegrator, der ein Verzögerungsglied beziehungsweise ein Schieberegister verstellt, kann eingangsseitig mit einem Multiplikator oder mit einem Phasendetektor verbunden sein. In beiden Fällen werden dem Rückkopplungsintegrator Signale zugeführt, die der Abweichung vom Abgleichpunkt des Regelkreises proportional sind. Bei Verwendung eines Phasendetektors läßt sich die Schaltung mit relativ einfachen Mitteln realisieren, wobei die daraus resultierende Messgenauigkeit des Laufzeitkorrelators gleich ist.

Die Erfindung soll nachfolgend anhand von Ausführungsbeispielen näher erläutert werden. In den zugehörigen Zeichnungen zeigen:

Fig. 1    eine schematische Darstellung einer Schaltung zur Bestimmung der Fadengeschwindigkeit beziehungsweise Lauflänge mit Analogbauteilen,

Fig. 2    eine der Fig. 1 entsprechende Darstellung, jedoch mit digitaler Signalverarbeitung,

Fig. 3a    die Analogdarstellung des zeitlichen Verlaufes stochastischer Fadensignale,

EP 0 582 112 B1

Fig. 3b      die Signumfunktion zu Fig. 3a,

Fig. 3c      die Signumfunktion nach vorheriger Differentiation der Signale und

Fig. 4      eine im wesentlichen der Fig. 2 entsprechende Darstellung, jedoch mit in den Regelkreis des Laufzeitkorrelators eingebautem Phasendetektor.

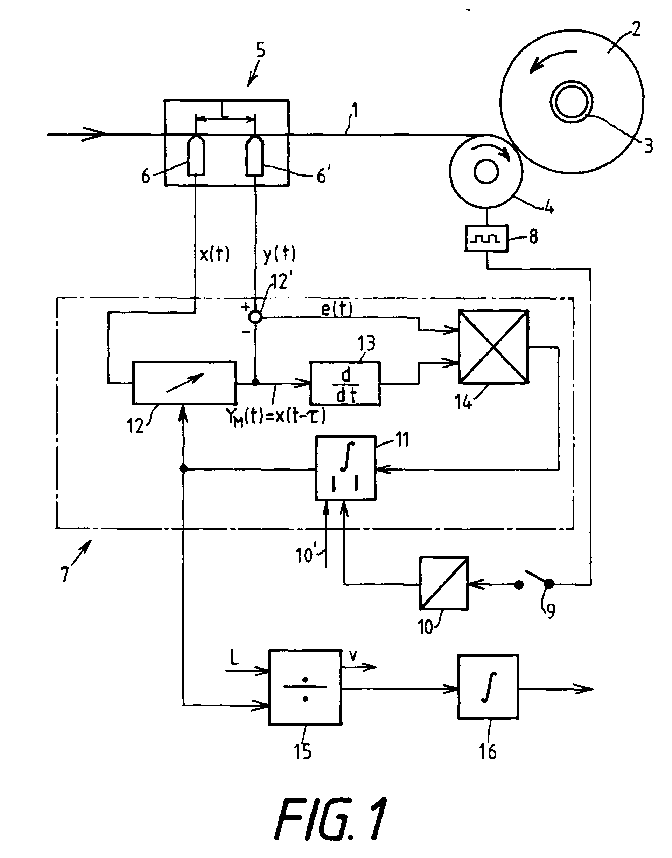

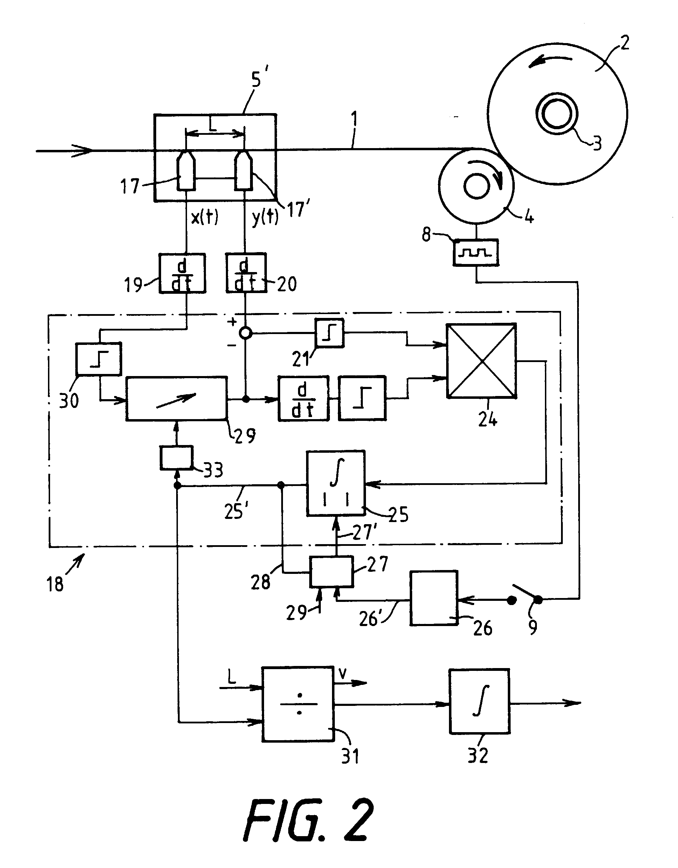

Zunächst soll an dieser Stelle nochmals festgestellt werden, daß es sich bei vorliegendem Verfahren in erster Linie um die Ermittlung der Geschwindigkeit eines Textilfadens auf Basis der Korrelationsrechnung handelt. Der dafür eingesetzte Laufzeitkorrelator 7 (Fig. 1) beziehungsweise 18 (Fig. 2) ist ein in wesentlichen Merkmalen bekannter Closed-Loop-Korrelator, bei dem mit Hilfe des Regelkreises eine Zeitverzögerung des Signals eines ersten Sensors 6 beziehungsweise 17 so eingestellt wird, daß eine maximale Korrelation des zeitverzögerten ersten Signales mit dem Signal des zweiten Sensors 6' beziehungsweise 17' erreicht wird. Dazu muß der Regelkreis auf dem Nulldurchgang der differenzierten Kreuzkorrelationsfunktion einrasten. Für das richtige Einrasten wird einem Rückkopplungsintegrator 11 beziehungsweise 25 ein Bereich vorgegeben, in dem das zutreffende Maximum der Modelltotzeit $\tau$ liegt.

Im Zusammenhang mit Fig. 1 sollen ganz kurz zusammengefaßt auch die an sich bekannten mathematischen Zusammenhänge erläutert werden.

Ein Textilfaden 1 wird auf eine als Auflaufspule dienende Kreuzspule 2 aufgewunden, die in einer Spulenhalterung 3 drehbar gelagert ist. Diese Kreuzspule 2 wird mit Hilfe einer Antriebswalze 4 an ihrem Umfang angetrieben, während der Faden dabei mit Hilfe einer in der Antriebswalze 4 vorhandenen Kehrgewindenut changiert wird. Auf die übrigen Details einer Spulmaschine wurde verzichtet, da sie bekannt sind und im Rahmen vorliegender Erfindung keine weitere Bedeutung haben.

In einem Meßkopf 5 sind mit einem gegenseitigen Abstand L zwei Sensoren 6 und 6' in Fadenlaufrichtung hintereinander angeordnet. Bei diesen Sensoren 6 beziehungsweise 6' handelt es sich um berührungsfrei arbeitende Sensoren, die zum Beispiel auf optischer oder kapazitiver Basis arbeiten. Sie erfassen eine stochastische Funktion des Textilfadens 1, die insbesondere durch Masse- beziehungsweise Volumenschwankungen des Textilfadens 1 gebildet wird.

Da davon ausgegangen werden kann, daß die genannten Charakteristika des Textilfadens 1 sich zwischen den beiden berührungsfrei arbeitenden Sensoren 6, 6' nicht ändern, kann darauf geschlossen werden, daß die vom Sensor 6 ermittelten Charakteristika um eine Laufzeit T verzögert auch am Sensor 6' meßbar sind. Damit ergibt sich eine sehr gute Korrelation der beiden Signale. Grob gesagt muß die Modelltotzeit $\tau$ so lange verändert werden, bis sich maximale Korrelation ergibt. In diesem Fall ist die Modelltotzeit $\tau$ gleich der tatsächlichen Laufzeit T.

Werden die vom Sensor 6 ermittelten Signale mit der Funktion x(t) bezeichnet und die Signale vom Sensor 6' mit y(t) ist im Idealfall davon auszugehen, das y(t) = x(t - T). Um nun T zu ermitteln, muß x(t) künstlich so lange um die Modelltotzeit $\tau$ verzögert werden, bis die Abweichungen e(t) im quadratischen Sinne minimal werden, das heißt, daß der mathematische Erwartungswert E gegen 0 geht. Daraus ergibt sich nachfolgende Bedingung für den Erwartungswert E:

$$E\left\{[y(t) - x(t - \tau)] \cdot \dot{x}(t - \tau)\right\} \stackrel{!}{=} 0$$

Da der Erwartungswert E, der ein Mittelwert ist, rechts und links vom Abgleichpunkt $\tau = T$ verschiedene Vorzeichen hat, ergibt sich eine Regelabweichung eines normalen Regelkreises. Mathmatisch handelt es sich dabei um ein Gradientenverfahren.

Zur Realisierung dieser Regelfunktion beziehungsweise Erfüllung der oben genannten Gleichung ist der Laufzeitkorrelator 7 in Fig. 1 gut geeignet. Die Signalfolge x(t) wird einem Verzögerungsglied 12 zugeführt, welches diese Signalfolge um die Modelltotzeit $\tau$ verschiebt. Daraus ergibt sich eine Signalfolge des Modells $y_M = x(t - \tau)$, die zum einen einem Differenzierer 13 und zum anderen einem Abgleichpunkt 12' zugeführt werden. Dem Abgleichpunkt 12' wird aber auch die nicht zeitverzögerte Signalfolge y(t) des Sensors 6' zugeführt. Die Abweichung e(t), die demzufolge der Differenz y(t) - x(t - $\tau$) entspricht, wird einem Multiplizierer 14 als ein Faktor zugeführt. Der andere Faktor gemäß obiger Gleichung wird im Differenzierer 13 durch Differentiation der zeitverzögerten Signalfolge x(t - $\tau$) gebildet. Das im Multiplizierer 14 gebildete Produkt wird dann in den Rückkopplungsintegrator 11 eingespeist, der seinerseits eine Verbindung zum Verzögerungsglied 12 besitzt und dort bei Abweichungen zwischen $\tau$ und T die Modelltotzeit nachregelt.

Ist die Abweichung e(t) null, was dem stabilen Zustand des Systemes entspricht, gibt auch der Rückkopplungsintegrator 11 keine Impulse an das Verzögerungsglied 12, so daß am Modell, das heißt, der Einstellung der Modelltotzeit

4

$\tau$ keine Änderung vorgenommen wird. Die Modelltotzeit $\tau$ ist dann identisch mit der Fadenlaufzeit im Sensor, was dem Korrelationsmaximum entspricht.

Wie bereits erläutert, besteht bei diesem Verfahren die Gefahr, daß zunächst der Laufzeitkorrelator auf einem Nebenmaximum, das heißt, einem falschen Abgleichpunkt, einrastet, wodurch, je nach Dauer bis zum Einrasten im richtigen Maximum über eine bestimmte Zeit eine von der tatsächlichen Laufzeit T abweichende Größe der Geschwindigkeitsermittlung zugrundegelegt wird.

Um das zu vermeiden, werden von einem Sensor beziehungsweise Impulsaufnehmer 8, zum Beispiel einem Hallsensor, magnetische Impulse von einem mit der Antriebstrommel 4 verbundenen Polrad aufgenommen. Die Dichte der Impulsfolge ist dabei ein Maß für die Umfangsgeschwindigkeit der in ihrem Durchmesser bekannten Antriebstrommel und damit auch annähernd für die Geschwindigkeit des laufenden Textilfadens 1. Der Impulsaufnehmer 8 dient demzufolge als Signalgeber von der Fadengeschwindigkeit proportionalen Signalen im Sinne vorliegender Erfindung. Die Signalfolge von Rechtecksignalen wird über einen in Fig. 1 allerdings geöffneten Schalter 9 einem Frequenz-/Spannungswandler 10 zugeführt. Dieser Frequenz-/Spannungswandler 11 ist ausgangsseitig mit dem Rückkopplungsintegrator 11 verbunden. Die Spannungssignale, die der Fadengeschwindigkeit proportional sind, geben dem Rückkopplungsintegrator 11 den Bereich vor, in dem das richtige Totzeitmaximum der Modelltotzeit $\tau$ liegt. Dabei kommt es lediglich darauf an, daß der Bereich so eng gewählt ist, daß Nebenmaxima außerhalb dieses Bereiches liegen. Die Breite des Bereiches wird über ein Offset, in Fig. 1 durch den Pfeil 10' symbolisiert, fest vorgegeben. Demzufolge wird der in der Breite festgelegte Bereich mittels der Spannungssignale, die ausgangsseitig am Frequenz-/Spannungswandler anliegen, lediglich verschoben.

Der Rückkopplungsintegrator 11 enthält, was hier jedoch nicht im einzelnen dargestellt ist, noch einen Bereichsvergleicher, dem neben der zugeführten Bereichsbreite und der Lage des Bereiches aufgrund der Signale des Frequenz-/Spannungswandlers 10 auch die ausgangsseitig am eigentlichen Integrator anliegenden Regelsignale zugeführt werden. Dieser Bereichsvergleicher korrigiert bei Über- oder Unterschreiten der Bereichsgrenzen am Ausgang des Integrators den Abgleichpunkt im Integrator. Dadurch wird auf extreme Geschwindigkeitsänderungen reagiert und gleichzeitig verhindert, daß das Hauptmaximum in Richtung auf ein Nebenmaximum verlassen wird, auf dem ohne Korrektur der Regelkreis gegebenenfalls sogar für längere Zeit einrasten könnte.

Derart extreme Geschwindigkeitsänderungen treten normalerweise nur auf, wenn nach der Unterbrechung des Wickelprozesses innerhalb sehr kurzer Zeit die Fadengeschwindigkeit von null auf die Betriebsgeschwindigkeit gebracht wird. Wird jedoch während des normalen Wickelvorganges eine Korrektur aufgrund des Überschreitens der Bereichsgrenzen erforderlich, deutet das auf eine Betriebsstörung. Diese kann beispielsweise darin bestehen, daß zwischen Antriebstrommel und Kreuzspule ein extrem hoher Schlupf auftritt. Wird also während des normalen Fadenlaufes eine derartige Korrektur vorgenommen, was vom Spulstellenrechner registriert wird, besteht die Möglichkeit, ein entsprechendes Störsignal auszugeben, um zum Beispiel die Bedienperson herbeizurufen.

Um zu dieser zusätzlichen Aussage zu kommen, muß die Schaltung für die Störmeldung für die Zeit blockiert werden, in der die Wickeleinrichtung "hochläuft".

Im Normalbetrieb, das heißt, während des Wickelvorganges mit geringfügigen Geschwindigkeitsschwankungen, werden sich die Bereichsgrenzen in etwa genauso verschieben wie das Totzeitmaximum, so daß sich während dieser Zeit ohne Vorliegen einer Störung keine Korrekturen erforderlich machen.

Der Ausgang des Rückkopplungsintegrators 11 ist neben der bereits beschriebenen Verbindung mit dem Verzögerungsglied 12 noch mit einem Dividierglied 15 verbunden. In diesem Dividierglied 15 ist der feststehende Abstand L zwischen den Sensoren 6 und 6' gespeichert, der zur Bildung des jeweiligen Momentanwertes der Geschwindigkeit durch die vom Rückkopplungsintegrator 11 ausgegebenen Werte von $\tau$, die der tatsächlichen Laufzeit T entsprechen, geteilt wird. Die Geschwindigkeit kann angezeigt, aufgezeichnet und/oder zur Weiterverarbeitung an einen Integrator 16 gegeben werden. Im Integrator 16 wird kumulativ von Beginn der Bewicklung einer Kreuzspule an die auf die Spulenhülse aufgewickelte Fadenlänge ermittelt.

Bei der in Fig. 2 dargestellten Realisierungsform der Erfindung wird eine digitale Signalverarbeitung vorgenommen. Der Fadenlauf des Textilfadens 1 entspricht dem in Fig. 1. Des weiteren sind Sensoren 17 und 17' ebenfalls in einem Abstand L innerhalb eines Meßkopfes 5' untergebracht und erzeugen Signalfolgen x(t) und y(t).

In den im Laufzeitkorrelator 18 angeordneten Triggern 21 und 30 wird die jeweilige Signumfunktion durch Quantisierung auf 1 Bit (Vorzeichenbewertung) der stetigen Funktion (Signalfolgen x(t) und y(t)) gebildet.

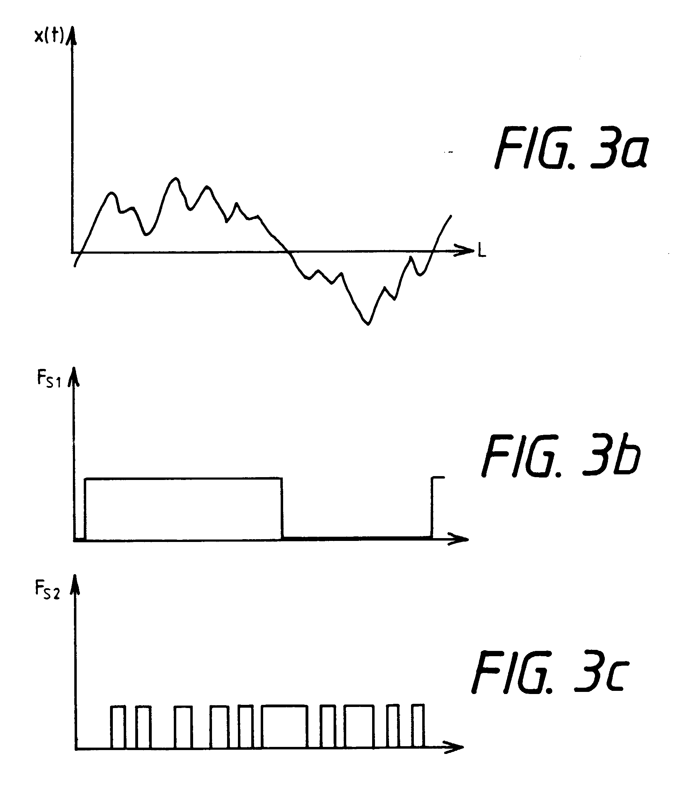

In Fig. 3a ist die stetige Funktion x (t) für einen laufenden Textilfaden 1 beispielhaft dargestellt. In Fig. 3b ist die entsprechende Signumfunktion $F_{S1}$ dargestellt, die sich bei einem direkt nachgeschalteten Trigger ergibt. Diese Signumfunktion besitzt ganz offensichtlich gegenüber der stetigen Funktion einen wesentlich geringeren Informationsgehalt. Das resultiert daraus, daß der Trigger jeweils nur den Durchgang durch einen Grenzwert, hier den Null-Durchgang, erfassen kann.

Aus diesem Grunde wurden zwischen die Sensoren 17 und 17' und die Trigger 21 und 30 Differenzierer 19 und 20 geschaltet. Durch die Differentiation der stetigen Funktion (Fig. 3a) werden sämtliche Extrempunkte (Minima und Maxima) als Null-Durchgänge dargestellt. Diese Null-Durchgänge werden von den nachgeschalteten Triggern erfaßt und ergeben eine wesentlich aussagefähigere Signumfunktion $F_{S2}$, die in Fig. 3c dargestellt ist.

Abweichend vom Aufbau des Laufzeitkorrelators 7 nach Fig. 1 ist zusätzlich im Laufzeitkorrelator 18 hinter dem Differenzierer 22 ein weiterer Trigger 23 zur Digitalisierung nachgeschaltet. Multiplizierer 24 und Rückkopplungsintegrator 25 arbeiten statt auf analoger auf digitaler Basis. Das Verzögerungsglied 12 in Fig. 1 ist hier durch ein Schieberegister 29 ersetzt. Dieses Schieberegister besitzt eine konstante Länge n und wird mit einer variablen Frequenz f getaktet. Die Taktfrequenzvorgabe kann durch einen Oszillator 33 oder einen Mikrorechner erfolgen. Die Modelltotzeit kann durch das Schieberegister 29 mit der Länge n dargestellt werden, wobei dessen Laufzeit von der Taktfrequenz f abhängt, das heißt $\tau = n/f$ .

Die Signalfolge des Impulsaufnehmers 8 wird mit hoher Taktfrequenz abgefragt und von einem Counter 26 erfaßt. Dabei wird die jeweilige Periodenlänge der Rechtecksignale durch Abzählen erfaßt, wobei, in Abhängigkeit von der Taktfrequenz, eine hohe Genauigkeit erzielt wird. Die der Periodenlänge entsprechende Taktzahl wird über eine Leitung 26' einem digitalen Bereichsvergleicher 27 zugeführt. Über ein durch Pfeil 29 symbolisiertes Offset wird auch hier die Breite des Bereiches fest vorgegeben. Mit 28 ist eine Rückkopplung vom Ausgang des Rückkopplungsintegrators 25 in den digitalen Bereichsvergleicher 27 dargestellt. Wie bereits im Zusammenhang mit Fig. 1 erläutert, wird hier, jedoch auf digitaler Basis, über eine Leitung 27' die Korrektur des Abgleichpunktes im Rückkopplungsintegrator 25 vorgenommen, was einem Verschieben des Breiches, in dem der Abgleichpunkt liegen muß, gleichkommt. Die ausgangsseitig vom Rückkopplungsintegrator 25 abgehenden Signale werden über eine Leitung 25' einem Oszillator 33 zugeführt, der die Taktfrequenz des Schieberegisters 29 beeinflußt. Auf diese Weise wird im Schieberegister die Modelltotzeit verändert und letztlich der Regelkreis ständig wieder angeglichen.

Ausgangsseitig an den Rückkopplungsintegrator 25 sind auch hier ein auf digitaler Basis arbeitendes Dividierglied 31 und ein Integrierer 32 nachgeschaltet, um die Momentanwerte der Fadengeschwindigkeit und der kumulativ ermittelten Lauflänge zu erfassen.

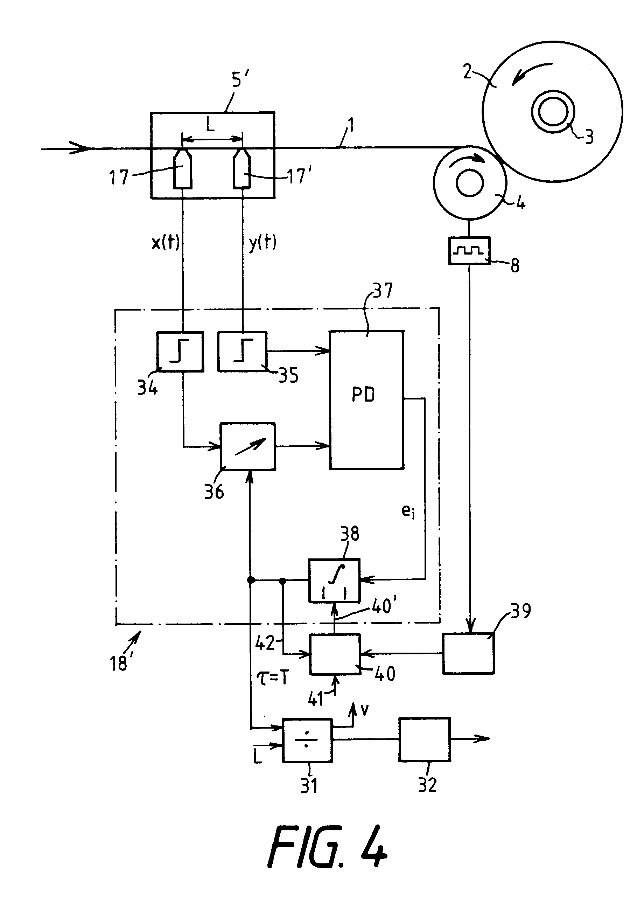

Eine weitere Variante der Erfindung ist in Fig. 4 dargestellt. Während auch hier in einem Meßkopf 5' zwei Sensoren 17 und 17' in festem Abstand L zur Erfassung stochastischer Signale des laufenden Fadens 1 angeordnet sind, der mittels der Antriebstrommel 4 auf eine Kreuzspule 2 aufgewunden wird, ist der Regelkreis des Laufzeitkorrelators 18' gegenüber der Darstellung in Fig. 2 verändert.

Die von den Sensoren 17 und 17' aufgenommenen analogen Signalfunktionen x(t) und y(t) werden zur Digitalisierung Triggern 34 und 35 zugeleitet. Die ausgangsseitig des Triggers 35 anliegende Signumfunktion wird direkt in einen Phasendetektor 37 eingespeist. Die ausgangsseitig am Trigger 34 anliegende Signumfunktion wird über das Schieberegister 36 geleitet, wodurch die bereits beschriebene Verzögerung um die Modelltotzeit $\tau$ erfolgt. Das zeitverzögerte Signal wird ebenfalls dem Phasendetektor 37 zugeführt. Dieser Phasendetektor 37 liefert dann ein von der Phasenlage der Eingangssignale abhängiges Ausgangssignal $e_i$. Dieses Signal $e_i$ wird dem Rückkopplungsintegrator 38 zugeführt, um erforderlichenfalls die Modelltotzeit $\tau$ nachzuregeln. Stimmt die Phasenlage der Eingangsspannungen am Phasendetektor maximal überein, so ist $e_i$ null und die Zeitverzögerung des Modells wird nicht weiter geändert. Die Modellaufzeit ist dann identisch mit der Fadenlaufzeit im Meßkopf.

Die Bereichsvorgabe erfolgt im wesentlichen analog dem anhand der Fig. 2 bereits erläuterten Beispiel. So ist dem Impulsaufnehmer 8 ein Counter 39 nachgeordnet, der an einen digitalen Bereichsvergleicher 40 angeschlossen ist. Der Pfeil 41 symbolisiert wieder die Offset-Eingabe der Breite des Bereiches. 40' symbolisiert die Korrektur des Abgleichpunktes und damit Lage des vorgegebenen Bereiches, in dem dieser Abgleichpunkt liegt. 42' steht für die Rückkopplung der Signale am Ausgang des Rückkopplungsintegrators 38, die im digitalen Bereichsvergleicher 40 mit den vom Counter 39 einspeisten Informationen verglichen werden.

Die in Fig. 4 dargestellte Schaltung eines Laufzeitkorrelators 18' ist gegenüber der in Fig. 2 dargestellten des Laufzeitkorrelators 18 vereinfacht. Darüber hinaus ist gegenüber dem vorangehend beschriebenen Ausführungsbeispiel auf die den Triggern 34 und 35 vorschaltbaren Differenzierer verzichtet worden. Damit soll lediglich demonstriert werden, daß auch auf diese Weise die Funktionfähigkeit des Laufzeitkorrelators gegeben ist. So besteht selbstverständlich auch bei diesem Beispiel die Möglichkeit der Vorschaltung von Differenzierern.

**Patentansprüche**

1. Vorrichtung zum Messen der Geschwindigkeit von Textilfäden (1) an einer Wickeleinrichtung, bei der zwei Sensoren (6, 6'; 17, 17') in festem Abstand L in Bewegungsrichtung des Textilfadens hintereinander angeordnet sind und die Meßwerte über einen Laufzeitkorrelator (7; 18) ausgewertet werden, dessen Regelkreis sich auf das Totzeitmaximum einer Modelltotzeit $\tau$ abgleicht, wobei $\tau = T$ die tatsächliche Laufzeit zwischen den beiden Sensoren (6, 6'; 17, 17') und die Geschwindigkeit v der Quotient von L und $\tau$ ist, und wobei ein zusätzlicher Sensor vorhanden ist, aus dessen Meßwerten eine Anfangsbedingung gebildet wird, die dem Feinregelkreis des Laufzeitkorrelators zur Vermeidung des Einstellens auf ein falsches Maximum der Kreuzkorrelationsfunktion vorgegeben wird, dadurch gekennzeichnet,

daß der zusätzliche Sensor (8) an der Wickeleinrichtung (2 bis 4) zur Ermittlung der Fadenaufwickelgeschwindigkeit angeordnet ist und daß die von diesem Sensor abgegebenen Signale dem Laufzeitkorrelator (7; 18) zur Bereichsvorgabe für das Einrasten des Regelkreises des Laufzeitkorrelators auf das richtige Totzeitmaximum der Modelltotzeit τ zuleitbar sind.

2.  Vorrichtung nach Anspruch 1, dadurch gekennzeichnet, daß der zusätzliche Sensor (8) für die Aufnahme der Umfangsgeschwindigkeit einer Antriebstrommel (4) für eine Auflaufspule (2) eingerichtet ist.

3.  Vorrichtung nach Anspruch 2, dadurch gekennzeichnet, daß der Sensor (8) ein Impulsaufnehmer für magnetische Impulse eines mit der Antriebstrommel (4) fest verbundenen Polrades ist.

4.  Vorrichtung nach Anspruch 3, dadurch gekennzeichnet, daß der Sensor (8) ausgangsseitig mit einem Frequenz-/Spannungsumwandler (10; 26) verbunden ist.

5.  Vorrichtung nach einem der Ansprüche 1 bis 4, dadurch gekennzeichnet, daß der Signalgeber mit einem Rückkopplungsintegrator (11; 25) des Regelkreises des Laufzeitkorrelators (7; 18) verbunden ist.

6.  Vorrichtung nach einem der Ansprüche 1 bis 5, dadurch gekennzeichnet, daß zur digitalen Signalverarbeitung den Sensoren (17, 17'), Trigger (21, 30) nachgeschaltet sind und daß das Verzögerungsglied des Regelkreises als Schieberegister (29) ausgebildet ist.

7.  Vorrichtung nach Anspruch 6, dadurch gekennzeichnet, daß zwischen die Sensoren und die Trigger Differenzierer (19, 20) geschaltet sind.

8.  Vorrichtung nach einem der Ansprüche 1 bis 7, dadurch gekennzeichnet, daß dem Dividierglied (15, 31) ein Integrator (16, 32) nachgeschaltet ist, der die Lauflänge des Textilfadens (1) kumulativ ermittelt.

9.  Vorrichtung nach einem der Ansprüche 1 bis 8, dadurch gekennzeichnet, daß im Regelkreis des Laufzeitkorrelators (7; 18) zur Speisung des Rückkopplungsintegrators (11; 25) ein Multiplizierer (14; 24) vorgesehen ist, dem das um die Modelltotzeit verschobene und differenzierte Signal des ersten Sensors (6; 17) und das Differenzsignal zwischen dem um die Modelltotzeit τ verschobenen Signal des ersten Sensors und dem Signal des zweiten Sensors zur Bildung des Produktes zuführbar sind.

10. Vorrichtung nach einem der Ansprüche 1 bis 8, dadurch gekennzeichnet, daß im Regelkreis des Laufzeitkorrelators (18') zur Speisung des Rückkopplungsintegrators (38) ein Phasendetektor (37) vorgesehen ist, dem das um die Modelltotzeit τ verschobene Signal des ersten Sensors (6; 17) und das Signal des zweiten Sensors (6'; 17') zum Vergleich und zur Ausgabe eines durch eine unterschiedliche Phasenlage der Eingangssignale gebildeten Differenzsignales zuführbar sind.

## Claims

1.  Device for measuring the speed of textile threads (1) on a spooling machine, in which two sensors (6, 6'; 17, 17') are disposed at a fixed distance L one behind the other in the direction of movement of the textile thread and the measured values are evaluated via a running time correlator (7; 18), the control loop of which is matched to the downtime maximum of a model downtime τ, wherein τ = T is the actual running time between the two sensors (6, 6'; 17, 17') and the speed v is the quotient of L and τ, and wherein an additional sensor is provided, from the measured values of which an initial condition is formed, which is prescribed to the fine control loop of the running time correlator to prevent adjustment to a false maximum of the cross-correlation function, characterised in that the additional sensor (8) is disposed on the spooling machine (2 to 4) to determine the thread spooling speed; and that the signals emitted by this sensor to the running time correlator (7; 18) may be directed to prescribe the range for locking the control loop of the running time correlator onto the correct downtime maximum of the model downtime τ.

2.  Device according to Claim 1, characterised in that the additional sensor (8) is set up for recording the circumferential speed of a drive drum (4) for a take-up spool (2).

3.  Device according to Claim 2, characterised in that the sensor (8) is a pulse recorder for magnetic pulses of a magnet wheel firmly connected to the drive drum (4).

4.  Device according to Claim 3, characterised in that the sensor (8) is connected on the output side to a frequency/voltage converter (10; 26).

5.  Device according to one of Claims 1 to 4, characterised in that signal transmitter is connected to a feedback integrator (11; 25) of the control loop of the running time correlator (7; 18).

6.  Device according to one of Claims 1 to 5, characterised in that triggers (21, 30) are connected downline of the sensors for digital processing of the signals (17, 17'); and that the delay element for the control loop is constructed as a shift register (29).

7.  Device according to Claim 6, characterised in that differentiators (19, 20) are connected between the sensors and the triggers.

8.  Device according to one of Claims 1 to 7, characterised in that an integrator (16, 32) is connected downline of the divider element (15, 31) which cumulatively determines the running length of the textile thread (1).

9.  Device according to one of Claims 1 to 8, characterised in that a multiplier (14; 24) is provided in the control loop of the running time correlator (7; 18) for supplying the feedback integrator (11; 25), and the signal of the first sensor (6; 17), which has been displaced by the model downtime and differentiated, and the difference signal between the signal of the first sensor, displaced by the model downtime $\tau$, and the signal of the second sensor can be supplied to said multiplier for formation of the product.

10. Device according to one of Claims 1 to 8, characterised in that a phase detector (37) is provided in the control loop of the running time correlator (18') for supplying the feedback integrator (38), and the signal of the first sensor (6; 17), displaced by the model downtime $\tau$, and the signal of the second sensor (6'; 17') can be supplied to said phase detector for comparison and emission of a difference signal formed by a different phase relation of the input signals.

## Revendications

1.  Dispositif pour mesurer la vitesse de fils textiles (1) dans une bobineuse, selon lequel deux capteurs (6, 6'; 17, 17') sont disposés à une distance fixe L l'un à la suite de l'autre dans la direction de déplacement du fil textile et les valeurs de mesure sont interprétées au moyen d'un corrélateur de temps de parcours (7; 18) dont le circuit de réglage s'ajuste au maximum de temps mort d'un temps mort de modèle $\tau$, $\tau = T$ étant le temps de parcours effectif entre les deux capteurs (6, 6'; 17, 17') et la vitesse v étant le quotient de L et $\tau$, et un capteur supplémentaire étant présent, à partir des valeurs de mesure duquel est formée une condition initiale qui est allouée au circuit de réglage fin du corrélateur de temps de parcours afin d'éviter le réglage à un maximum erroné de la fonction de corrélation croisée,
    **caractérisé** en ce que le capteur supplémentaire (8) est disposé sur la bobineuse (2 à 4) afin de déterminer la vitesse de bobinage du fil, et en ce que les signaux délivrés par ce capteur peuvent être apportés au corrélateur de temps de parcours (7; 18) pour l'allocation de plage en vue du verrouillage du circuit de réglage du corrélateur de temps de parcours sur le maximum correct de temps mort du temps mort de modèle $\tau$.

2.  Dispositif selon la revendication 1, **caractérisé** en ce que le capteur supplémentaire (8) est conçu pour enregistrer la vitesse circonférentielle d'un tambour d'entraînement (4) pour une bobine réceptrice (2).

3.  Dispositif selon la revendication 2, **caractérisé** en ce que le capteur (8) est un enregistreur d'impulsions pour des impulsions magnétiques d'une roue polaire solidaire du tambour d'entraînement (4).

4.  Dispositif selon la revendication 3, **caractérisé** en ce que le capteur (8) est relié, du côté de sortie, à un convertisseur fréquence-tension (10 ; 26).

5.  Dispositif selon une des revendications 1 à 4, **caractérisé** en ce que le transmetteur de signaux est relié à un intégrateur de réaction (11 ; 25) du circuit de réglage du corrélateur de temps de parcours (7 ; 18).

6.  Dispositif selon une des revendications 1 à 5, **caractérisé** en ce que des déclencheurs (21, 30) sont montés à la

EP 0 582 112 B1

suite des capteurs (17 ; 17') pour le traitement numérique des signaux, et en ce que l'élément de retard du circuit de réglage est réalisé sous forme de registre à décalage (29).

7. Dispositif selon la revendication 6, **caractérisé** en ce que des différenciateurs (19, 20) sont montés entre les capteurs et les déclencheurs.

8. Dispositif selon une des revendications 1 à 7, **caractérisé** en ce qu'un intégrateur (16, 32), qui détermine de façon cumulative la longueur de parcours du fil textile (1), est monté à la suite de l'élément diviseur (15, 31).

9. Dispositif selon une des revendications 1 à 8, **caractérisé** en ce qu'un multiplicateur (14; 24) est prévu dans le circuit de réglage du corrélateur de temps de parcours (7; 18) afin d'alimenter l'intégrateur de réaction (11 ; 25), multiplicateur auquel peuvent être apportés, afin de former leur produit, le signal du premier capteur (6; 17), décalé du temps mort de modèle et différencié, et le signal différentiel entre le signal du premier capteur, décalé du temps mort de modèle $\tau$, et le signal du deuxième capteur.

10. Dispositif selon une des revendications 1 à 8, **caractérisé** en ce qu'un détecteur de phase (37) est prévu dans le circuit de réglage du corrélateur de temps de parcours (18') afin d'alimenter l'intégrateur de réaction (38), détecteur auquel peuvent être apportés le signal du premier capteur (6 ; 17) décalé du temps mort de modèle $\tau$ et le signal du deuxième capteur (6'; 17'), afin de les comparer et de délivrer un signal différentiel formé par une position de phase différente des signaux d'entrée.

**FIG. 1**

FIG. 2

FIG. 3a

FIG. 3b

FIG. 3c

FIG. 4